(19) Europäisches Patentamt
European Patent Office
Office européen des brevets

(11) **EP 1 029 443 B1**

(12) **EUROPÄISCHE PATENTSCHRIFT**

| | |
|---|---|
| (45) Veröffentlichungstag und Bekanntmachung des Hinweises auf die Patenterteilung:<br>**01.09.2004  Patentblatt 2004/36** | (51) Int Cl.⁷: **A01F 29/16**, A01D 75/18 |

(21) Anmeldenummer: **00100606.3**

(22) Anmeldetag: **13.01.2000**

(54) **Verfahren zum Erkennen von Fremdkörpern in Erntemaschinen**

Method for recognizing foreign bodies in harvesting machines

Méthode pour reconnaître des corps étrangers dans des machines de récolte

| | |
|---|---|
| (84) Benannte Vertragsstaaten:<br>**DE FR GB** | (72) Erfinder: **Oliva, Christoph**<br>**88348 Bad Saulgau (DE)** |
| (30) Priorität: **05.02.1999  DE 19904626** | (74) Vertreter: **Müller, Lutz**<br>**Case Harvesting Systems GmbH,**<br>**Berghausstrasse 1**<br>**01844 Neustadt (DE)** |
| (43) Veröffentlichungstag der Anmeldung:<br>**23.08.2000  Patentblatt 2000/34** | |
| (73) Patentinhaber: **Case Harvesting Systems GmbH**<br>**01844 Neustadt (DE)** | (56) Entgegenhaltungen:<br>**EP-A- 0 217 417      EP-A- 0 217 418**<br>**DE-U- 29 616 473      FR-A- 2 680 625** |

**Beschreibung**

Die Erfindung betrifft ein Verfahren zum Erkennen von Fremdkörpern in Erntemaschinen, insbesondere in Feldhäckslern, die zur Ernte landwirtschaftlicher Produkte, forstwirtschaftlicher Kulturen sowie sogenannter nachwachsender Rohstoffe geeignet sind, nach den Merkmalen im Oberbegriff des Patentanspruches 1 und denen des selbständigen 3. Nebenanspruches.

Zum Erkennen von metallischen oder nichtmetallischen Fremdkörpern gibt es bereits eine Vielzahl verschiedenster Lösungen.

Eine Möglichkeit wurde nach der DD 110 413 und der DD 116 553 darin gesehen, den Erntegutfluß zwischen den Zuführwalzen eines Feldhäckslers über mechanische Tastvorrichtungen nach Fremdkörpern abzusuchen und diese mittels verschiedener Mechanismen zu entfernen. Es hat sich jedoch gezeigt, daß diese Lösungen in der Praxis untauglich sind, da bei ihnen der Fördervorgang so negativ beeinflußt wird, daß keine hohen Erntegutdurchsätze erreichbar sind. Außerdem sind derartige Lösungen kostenintensiv in der Herstellung und hochgradig störanfällig.

Des weiteren ist es nach der DD 114 893 bekannt, den Erntegutfluß vor der Fördereinrichtung zu durchleuchten. Nachteilig an dieser Lösung ist, daß sehr große Lichtleistungen zum Durchleuchten des Erntegutflusses notwendig sind. Damit ist bei der Ernte von Stroh und Welkgut die Brandgefahr unvertretbar hoch, so daß auch diese Lösung in der Praxis nicht ausführbar ist.

Eine weitere Lösung gemäß der DD 111 534 sieht vor, daß vor der Fördereinrichtung im Bereich einer Querförderschnecke eine Vielzahl von elektronischen Tastern vorgesehen ist, die im Falle der Berührung mit einem Fremdkörper einen Stromfluß zu einer Stopp- bzw. Fremdkörperentfernungseinrichtung auslösen und diese dadurch betätigen. Nachteilig ist hier, daß die aufgenommenen Fremdkörper im Erntegutfluß, der durch die Querförderschnecke zusammengeführt und dabei in sich verfilzt und verdreht wird, eingebettet werden und damit gar nicht erst mit den Tastern in Berührung kommen, wodurch der Stromfluß auch gar nicht ausgelöst wird und die Fremdkörper unerkannt bleiben.

In der DE 32 13 713 ist eine weitere Möglichkeit zum Erkennen von Fremdkörpern in Erntemaschinen aufgezeigt, bei der eine Zuführwalze der Fördereinrichtung an der Innenfläche des Mantels eine Vielzahl von piezoelektrischen Sensoren besitzt, die die Schallsignale der Fremdkörper beim Auftreffen auf die Fördereinrichtung in elektrische Signale umwandeln. Nachteilig an dieser Lösung ist sowohl der hohe Fertigungsaufwand als auch die geringe Funktionssicherheit, da Schleifringe zur Abnahme der elektrischen Signale notwendig sind, die unter den harten landwirtschaftlichen Einsatzbedingungen sehr schnell verschmutzen und damit die elektrischen Signale nicht mehr sicher übertragen. Außerdem besteht auch hier die Gefahr, daß die Fremdkörper im Erntegut so eingebettet liegen, daß kein unmittelbarer Kontakt mit der Zuführwalze entsteht und somit das spezifische Schallsignal und demzufolge auch das elektrische Signal ausbleibt.

Eine weitere Möglichkeit zum Erkennen von Fremdkörpern im Erntegutfluß landwirtschaftlicher Erntemaschinen ist in der DE 296 16 473 U1 beschrieben, deren Fördereinrichtung mit senkrecht zum Erntegutfluß ausweichbaren und einen Druck von oben auf das Erntegut ausübenden Zuführwalzen ausgestattet ist. Um die Dynamik der Zuführwalzen beim Passieren ungleicher Erntegutmassen bzw. von Fremdkörpern zu dämpfen, sind zwischen den Zuführwalzen und dem Häckselkastengestell neben Zugfedern noch Stoßdämpfer angebracht. Auf dem Verbindungsstück zwischen den Stoßdämpfern und dem Häckselkastengestell befinden sich deren Dämpfungskräfte oder -drücke erfassende Sensoren, deren Signale einer Auswerteeinheit zugeführt werden. Übersteigt das von einem Fremdkörper hervorgerufene Signal das als Schwellwert bezeichnete Signal aus maximalen Schwankungen der Schichtdicke des Erntegutes, wird dieses zum Auslösen einer Stoppeinrichtung für die Fördereinrichtung oder zum Aktivieren einer Warneinrichtung benutzt. Nachteilig an dieser Lösung ist einmal, daß ihre Einsatzmöglichkeiten äußerst beschränkt sind, da nur die wenigsten Feldhäcksler mit Stoßdämpfern ausgestattet sind. Zum anderen erzeugt sie noch zuviel fremdkörperanzeigende Signale, wenn gar keine Fremdkörper da sind bzw. tatsächlich vorhandene Fremdkörper werden nicht erkannt.

Ein ähnlich arbeitendes Verfahren zum Erkennen von Fremdkörpern bzw. eine dieses Verfahren verwirklichende Vorrichtung sind mit der EP 0 217 417 B1 und der EP 0 217 418 B1 bekannt geworden. Im Unterschied zur Lösung nach der DE 296 16 473 U1 werden hier keine Dämpfungskräfte oder -drücke gemessen, sondern es werden die Beschleunigungswerte der auf die Zuführwalzen vom Erntegut oder von Fremdkörpern ausgelösten Ausweichbewegungen gemessen und bewertet. Die Signalverarbeitung gestaltet sich analog wie bei der Lösung nach der DE 296 16 473 U1. Auch hier ist von Nachteil, daß insbesondere bei geringen Fördergeschwindigkeiten des Erntegutes zum Erzielen kurzer Häcksellängen Fremdkörper unerkannt bleiben und bei hohen Fördergeschwindigkeiten nicht vorhandene Fremdkörper signalisiert werden.

Deshalb liegt der Erfindung die Aufgabe zugrunde, ein Verfahren zum Erkennen von Fremdkörpern in Erntemaschinen zu schaffen, das innerhalb eines sehr breiten Bereiches von geringen bis hohen Fördergeschwindigkeiten des Erntegutes zutreffende Signale über das Vorhandensein von Fremdkörpern im Erntegut liefert.

Diese Aufgabe wird gemäß der Erfindung durch die Merkmale des 1. Patentanspruches sowie des selbständigen 3. Nebenanspruches gelöst, wobei in den darauf rückbezogenen Unteransprüchen Merkmale aufgeführt sind, die diese Lösung in vorteilhafter Weise weiterentwickeln.

Die über das Feld fahrende Erntemaschine mäht entweder das Erntegut oder sie nimmt es mittels einer Pickup aus einem Schwad auf, von wo aus es von einer nachgeordneten Fördereinrichtung in Form einer Matte einem Arbeitsaggregat zugeführt wird. Das kann beispielsweise im Falle eines Feldhäckslers ein Häckselaggregat oder im Falle eines Mähdreschers die Dreschtrommel sein. Während dieses Fördervorganges wird durch ein quer zur Förderrichtung des Erntegutes bewegliches Element auf das Erntegut Druck ausgeübt und dadurch verdichtet. Da das Erntegut der Fördereinrichtung nicht gleichmäßig vom Mähwerk oder der Pickup zugeführt wird, weicht das bewegliche Element entsprechend der sich ständig ändernden Schichthöhe des Erntegutes aus. Das Ausmaß der Ausweichbewegungen des Elementes pro Zeiteinheit kann mit einer geeigneten Meßeinrichtung in Form von Meßwerten $M_B$ ausgedrückt werden. Ist nun ein Fremdkörper im Erntegut enthalten, ganz gleich ob ein metallischer oder beispielsweise ein Stein, so ist dieser durch das bewegliche Element nicht zusammenpreßbar und das Element muß innerhalb kurzer Zeit stark ausweichen. Damit entsteht ein sehr großer Meßwert $M_B$, der über den maximalen allein durch die Schichthöhenschwankungen des Erntegutes hervorgerufenen Meßwerten $M_X$ liegt, was als sicheres Anzeichen für den Durchgang eines Fremdkörpers gilt. Wenn nun alle Meßwerte $M_B$ einer Auswerteeinheit zugeführt und mit einem dort gespeicherten Schwellwert S verglichen werden, kann immer beim Erreichen oder Überschreiten des Schwellwertes S ein Signal erzeugt werden, das entweder über eine Anzeigeeinrichtung vor dem Fremdköper warnt oder über eine Stoppeinrichtung zum Stillsetzen der Fördereinrichtung benutzt wird.

Da es sich inzwischen herausgestellt hat, daß neben der Größe eines Fremdkörpers seine gemeinsame Fördergeschwindigkeit V mit dem Erntegut noch bedeutender für die Größe des Meßwertes $M_B$ ist, wird der zum Vergleich mit den Meßwerten $M_B$ herangezogene Schwellwert S in Abhängigkeit von der Fördergeschwindigkeit V erfindungsgemäß verändert. Das wird gemacht, indem eine beliebige Fördergeschwindigkeit V aus an der Erntemaschine realisierten Möglichkeiten ausgewählt wird, die als definierte Fördergeschwindigkeit $V_D$ bezeichnet wird. Danach wird der zur definierten Fördergeschwindigkeit $V_D$ gehörende definierte Schwellwert $S_D$ beispielsweise im Feldversuch festgestellt, der größer als der Meßwert $M_X$ sein muß, der sich allein aus der sich ändernden Schichthöhe des Erntegutes bei der definierten Fördergeschwindigkeit $V_D$ ergibt. Dieser definierte Schwellwert $S_D$ wird einer Auswerteeinheit zur Speicherung zugeleitet.

Für jede von der definierten Fördergeschwindigkeit $V_D$ abweichende Fördergeschwindigkeit V nach unten oder nach oben wird der Schwellwert S in der Auswerteeinheit rechnerisch nach folgender Formel verändert.

$$S = S_D \times \frac{V^2}{V^2_D}$$

In einer zweckmäßigen Ausgestaltung der Erfindung nach dem 2. Unteranspruch kann diese Rechenoperation vereinfacht werden, weil damit $V_D$ den rechnerischen Wert 1" hat und damit vorstehende Formel jetzt lautet:

$$S = S_D \times V^2.$$

Im selbständigen 3. Nebenanspruch wird eine weitere Möglichkeit zur Verwirklichung des erfindungsgemäßen Verfahrens gesehen. Diese Lösung unterscheidet sich von dem im 1. Patentanspruch niedergelegten Verfahren lediglich dadurch, daß die Meßwerte $M_B$ in Abhängigkeit von der Fördergeschwindigkeit V verändert und mit dem festen definierten Schwellwert $S_D$ verglichen werden. Der variable Meßwert $M_B$ errechnet sich nach folgender Formel:

$$M_{B \text{ variabel}} = M_B \times \frac{V^2_D}{V^2}$$

Ein Signal für das Vorhandensein eines Fremdkörpers ergeht analog zur Lösung nach dem 1. Patentanspruch an die Anzeigeeinrichtung bzw. die Stoppeinrichtung zum Stillsetzen der Fördereinrichtung in den Fällen, wenn der variable Meßwert $M_B$ den definierten Schwellwert $S_D$ erreicht bzw. überschreitet.

Nach dem 4. Unteranspruch wird eine bevorzugte Ausführung der Meßeinrichtung für beide Lösungen darin gesehen, diese als Beschleunigungsgeber auszubilden.

In einer weiteren bevorzugten Ausgestaltung der Erfindung nach dem 5. Unteranspruch ist es möglich, die Meßeinrichtungen als Sensor auszubilden, der die Dämpfungskraft bzw. den Dämpfungsdruck eines Stoßdämpfers ermittelt, der sich zwischen dem beweglichen und auf das Erntegut Druck ausübenden Element und dem Häckselkastengestell befindet.

Für die Signale beider Lösungen bietet es sich zu deren einfacher Weiterverarbeitung nach dem 6. Unteranspruch an, sie z. B. über ein induktives System in elektrische Spannungsimpulse umzuformen.

In einer besonders einfachen Ausführungsvariante für das bewegliche und Druck auf das Erntegut ausübende Element an einem Feldhäcksler hat es sich gemäß dem 7. Unteranspruch bewährt, dafür die vorhandene Vorpreßwalze, die Preßwalze und die beide Walzen miteinander verbindenden Schwingen sowie die Schwingen zur schwenkbeweglichen Aufhängung der Preßwalze am Häckselkastengestell zu benutzen.

Vorsorglich wird an dieser Stelle darauf hingewiesen, daß der Schutzumfang des erfindungsgemäßen Verfahrens auch für naheliegende und hier nicht beschriebene Varianten des erfindungsgemäßen Grundgedankens gilt. Darunter fällt zum Beispiel, daß die Meßeinrichtung nur Meßwerte $M_B$ als Signal ausgibt, die über dem Schwellwert S bzw. dem definierten Schwellwert $S_D$ liegen. Das heißt, daß dieser Vergleich in der Meßeinrichtung selbst vorgenommen wird, weil die Auswerteeinheit in die Meßeinrichtung integriert ist usw.

Zusammenfassend wäre damit als Vorteil der Erfindung zu nennen, daß mit diesem Verfahren nun exakte Meßwerte zur Erkennung von Fremdkörpern in Erntemaschinen für sehr unterschiedliche Fördergeschwindigkeiten V vorliegen. Damit werden zumindest alle für die Erntemaschine gefährlichen Fremdkörper erkannt, so daß daraus resultierende Schäden nicht mehr auftreten. Außerdem werden Fehlanzeigen von Fremdkörpern vermieden, wodurch sich die effektive Einsatzzeit der Erntemaschine erhöht.

Die Erfindung soll nun anhand eines Ausführungsbeispiels näher erläutert werden, wobei die Figuren zeigen:

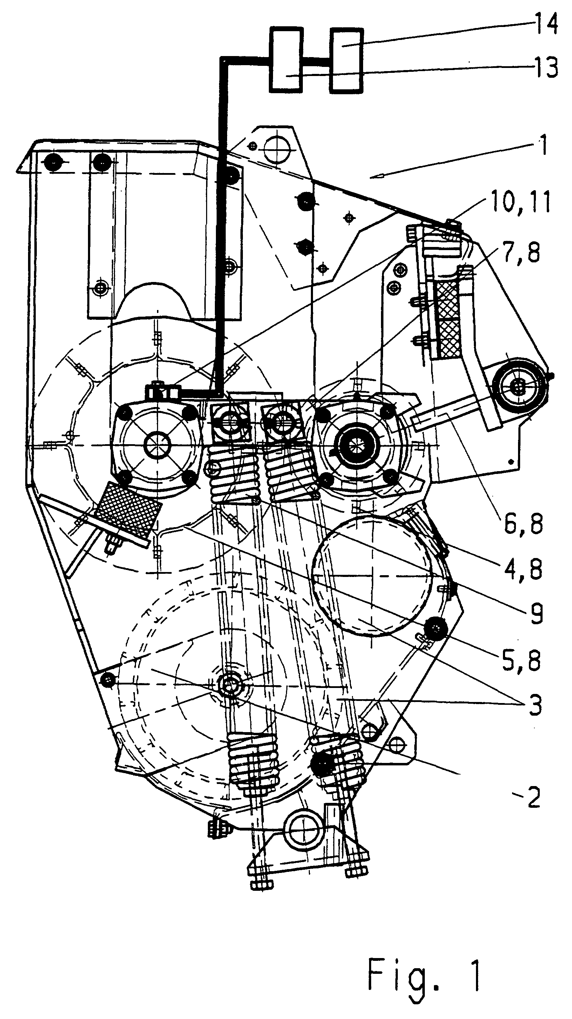

Fig. 1   eine Seitenansicht auf eine Fördereinrichtung eines Feldhäckslers

Fig. 2   einen Schnitt in Längsrichtung durch die Fördereinrichtung nach Fig. 1 kurz vor der Annahme eines Fremdkörpers durch die Zuführwalzen

In beiden Figuren ist eine Fördereinrichtung 1 gezeigt, die das Erntegut einem nicht dargestellten Arbeitsaggregat zuführt, was in dem Fall ein Häckselaggregat wäre. Sie besteht aus fest im Häckselkastengestell 2 gelagerten unteren Zuführwalzen 3 und aus einer nach oben ausweichbar aufgehangenen Preßwalze 4 sowie einer ebenfalls nach oben ausweichbar aufgehangenen Vorpreßwalze 5. Die Preßwalze 4 und die Vorpreßwalze 5 sind untereinander mit Schwingen 6 verbunden und die Preßwalze 4 ist mit weiteren Schwingen 7 am Häckselkastengestell 2 schwenkbeweglich befestigt.

Die Vorpreßwalze 5, die Preßwalze 4 und die Schwingen 6;7 verkörpern gemeinsam das bewegliche und auf das Erntegut Druck ausübende Element 8. An der Schwinge 6 einenends angreifende und anderenends am Häckselkastengestell 2 gelenkig fixierte Zugfedern 9 sorgen für die Ausübung des benötigten Druckes.

Möglichst weit vorn auf der Schwinge 6 ist eine Meßeinrichtung 10 zum Messen der Intensität der Ausweichbewegung pro Zeiteinheit befestigt, die in diesem Ausführungsbeispiel ein Beschleunigungsgeber 11 ist.

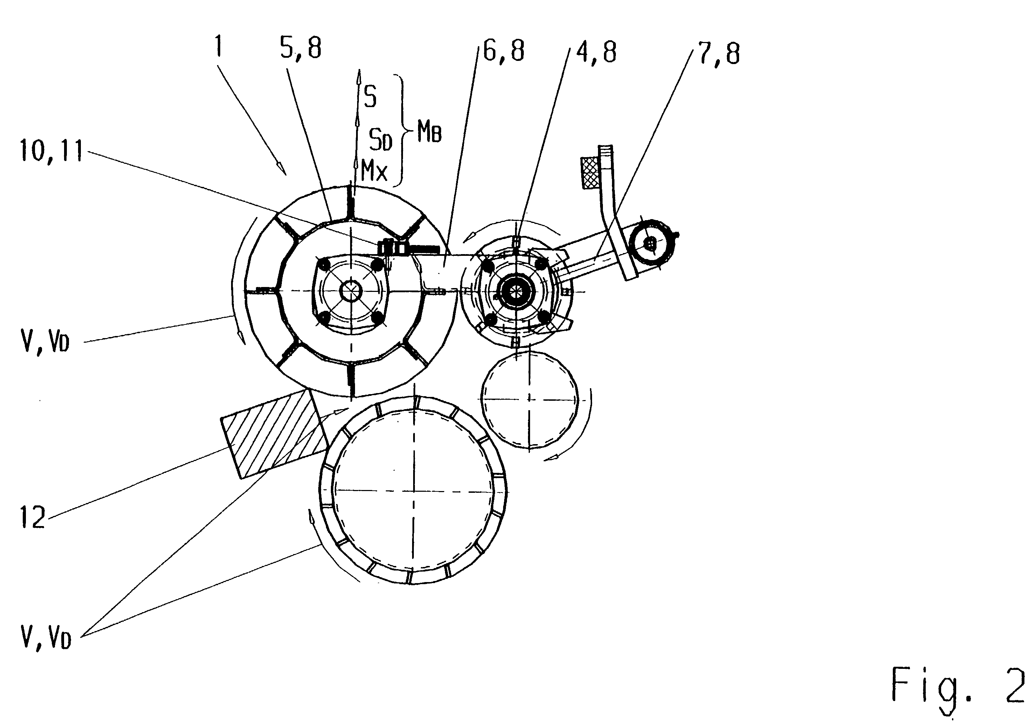

In Fig. 2 ist ein Fremdkörper 12 zu sehen, der sich mit der Fördergeschwindigkeit $V_D$ bzw. V auf die Vorpreßwalze 5 zubewegt. Je nach der Größe des Fremdkörpers 12 und vor allem dessen Fördergeschwindigkeit $V_D$ bzw. V weicht die Vorpreßwalze 5 nach oben aus. Der dabei auftretende Meßwert $M_B$ als Maß für die erzeugte Beschleunigung wird vom Beschleunigungsgeber 11 ermittelt und zur weiteren Signalverarbeitung an eine Auswerteeinheit 13 sowie an eine Anzeige- bzw. Stoppeinrichtung 14 weitergeleitet.

## Bezugszeichenaufstellung

| 1 | Fördereinrichtung |
|---|---|
| 2 | Häckselkastengestell |
| 3 | untere Zuführwalze |
| 4 | Preßwalze |
| 5 | Vorpreßwalze |
| 6 | Schwinge |
| 7 | Schwinge |
| 8 | Element |
| 9 | Zugfeder |
| 10 | Meßeinrichtung |
| 11 | Beschleunigungsgeber |
| 12 | Fremdkörper |
| 13 | Auswerteeinheit |
| 14 | Anzeige- bzw. Stoppeinrichtung |
| $V_D$ | definierte Fördergeschwindigkeit des Erntegutes |
| V | augenblickliche Fördergeschwindigkeit des Erntegutes |
| $M_B$ | ein das Ausmaß der Ausweichbewegung des Elementes pro Zeiteinheit verkörpernder Meßwert |
| $M_X$ | Meßwert $M_B$ für die maximale Ausweichbewegung des Elementes aus der sich ändernden Schichthöhe des Erntegutes |
| $S_D$ | definierten Schwellwert bei der Fördergeschwindigkeit $V_D$ |
| S | von der Fördergeschwindigkeit V abhängiger Schwellwert |

## Patentansprüche

1. Verfahren zum Erkennen von Fremdkörpern in Erntemaschinen, insbesondere in selbstfahrenden Feldhäckslern, wobei das Verfahren die Schritte umfaßt:

a) das Erntegut wird von einer Fördereinrichtung (1) in Form einer Matte einem Arbeitsaggregat mit variablen Fördergeschwindigkeiten V zugeführt,
b) ein quer zur Förderrichtung des Erntegutes bewegliches und auf das Erntegut Druck ausübendes Element (8) bewirkt dessen Verdichtung,
c) das Element (8) führt dabei von der sich ändernden Schichthöhe des Eintegutes und/oder der Gestalt von im Erntegut mitgeführter Fremdkörper (12) abhängige Ausweichbewegungen aus,
d) eine Meßeinrichtung (10) ermittelt Meßwerte

($M_B$) als Ausmaß für die Ausweichbewegungen des Elementes (8) pro Zeiteinheit, die einer Auswerteeinheit (13) zugeführt werden,

e) die Auswerteeinheit (13) erzeugt ein Signal, wenn der Meßwert ($M_B$) einen vorgegebenen Schwellwert (S) erreicht bzw. überschreitet, das einer Anzeige- bzw. Stoppeinrichtung (14) zur Stillsetzung der Fördereinrichtung (1) zugeführt wird,

das **dadurch gekennzeichnet ist, daß**

f) für eine definierte Fördergeschwindigkeit ($V_D$) der Auswerteeinheit (13) ein definierter Schwellwert ($S_D$) vorgegeben wird, der größer als der Meßwert ($M_X$) für maximale Ausweichbewegungen aus der sich ändernden Schichthöhe des Erntegutes bei dieser definierten Fördergeschwindigkeit ($V_D$) ist,

g) für jede von der definierten Fördergeschwindigkeit ($V_D$) abweichende Fördergeschwindigkeit (V) der zum Vergleich mit dem Meßwert ($M_B$) genutzte Schwellwert (S) aus dem Produkt des definierten Schwellwertes ($S_D$) und einem Quotienten, gebildet aus dem Quadrat der Fördergeschwindigkeit (V) im Zähler und dem Quadrat der definierten Fördergeschwindigkeit ($V_D$) im Nenner, neu errechnet wird.

2. Verfahren nach Anspruch 1, **dadurch gekennzeichnet, daß**

a) die definierte Fördergeschwindigkeit ($V_D$) die in der Erntemaschine verwirklichte geringste Fördergeschwindigkeit ist, für die der Auswerteeinheit (13) der dementsprechende definierte Schwellwert ($S_D$) vorgegeben wird, der größer als der Meßwert ($M_X$) für maximale Ausweichbewegungen aus der sich ändernden Schichthöhe des Erntegutes bei der geringsten Fördergeschwindigkeit ist,

b) der Absolutbetrag der geringsten Fördergeschwindigkeit in der Auswerteeinheit (13) unabhängig von seiner tatsächlichen Größe und Dimensionierung rein rechnerisch den Wert ("1") erhält,

c) mit sich erhöhender Fördergeschwindigkeit (V) der zum Vergleich mit dem Meßwert ($M_B$) genutzte Schwellwert (S) aus dem Produkt des definierten Schwellwertes ($S_D$) bei der geringsten Fördergeschwindigkeit und dem Quadrat des Absolutbetrages der sich erhöhenden Fördergeschwindigkeit (V) errechnet wird, wobei der Absolutbetrag der sich erhöhenden Fördergeschwindigkeit (V) ausgehend vom Wert (1") für die geringste Fördergeschwindigkeit analog gebildet wird.

3. Verfahren zum Erkennen von Fremdkörpern in Erntemaschinen, insbesondere in selbstfahrenden Feldhäckslern, wobei das Verfahren die Schritte umfaßt:

a) das Erntegut wird von einer Fördereinrichtung (1) in Form einer Matte einem Arbeitsaggregat mit variablen Fördergeschwindigkeiten (V) zugeführt,

b) ein quer zur Förderrichtung des Erntegutes bewegliches und auf das Erntegut Druck ausübendes Element (8) bewirkt dessen Verdichtung,

c) das Element (8) führt dabei von der sich ändernden Schichthöhe des Erntegutes und/oder der Gestalt von im Erntegut mitgeführter Fremdkörper (12) abhängige Ausweichbewegungen aus,

d) eine Meßeinrichtung (10) ermittelt Meßwerte ($M_B$) als Ausmaß für die Ausweichbewegungen des Elementes (8) pro Zeiteinheit, die einer Auswerteeinheit (13) zugeführt werden,

e) die Auswerteeinheit (13) erzeugt ein Signal, wenn der Meßwert ($M_B$) einen vorgegeben Schwellwert (S) erreicht bzw. überschreitet, das einer Anzeige- bzw. Stoppeinrichtung (14) zur Stillsetzung der Fördereinrichtung ( 1 ) zugeführt wird,

das **dadurch gekennzeichnet ist, daß**

f) für eine definierte Fördergeschwindigkeit ($V_D$) der Auswerteeinheit (13) ein definierter Schwellwert ($S_D$) vorgegeben wird, der größer als der Meßwert ($M_X$) für maximale Ausweichsbewegungen aus der sich ändernden Schichthöhe des Erntegutes bei dieser definierten Fördergeschwindigkeit ($V_D$) ist,

g) für jede von der definierten Fördergeschwindigkeit ($V_D$) abweichende Fördergeschwindigkeit (V) der zum Vergleich mit dem definierten Schwellwert ($S_D$) genutzte veränderte Meßwert ($M_B$) durch Multiplikation mit dem Quotienten, gebildet aus dem Quadrat der definierten Fördergeschwindigkeit ($V_D$) im Zähler und dem Quadrat der Fördergeschwindigkeit (V) im Nenner, neu errechnet wird.

4. Verfahren nach den Ansprüchen 1 bis 3, **dadurch gekennzeichnet, daß** die Meßeinrichtung (10) ein Beschleunigungsgeber (11) ist.

5. Verfahren nach den Ansprüchen 1 bis 3, **dadurch gekennzeichnet, daß** die Meßeinrichtung (10) ein die Dämpfungskraft bzw. den Dämpfungsdruck eines Stoßdämpfers erfassender Sensor ist, wobei sich der Stoßdämpfer zwischen dem beweglichen und auf das Erntegut Druck ausübenden Element (8) und dem Häckselkastengestell (2) befindet.

6. Verfahren nach den Ansprüchen 1 bis 5, **dadurch gekennzeichnet, daß** die Meßwerte ($M_B$) und die Schwellwerte ($S_D$;S) in elektrische Spannungsimpulse umgeformt werden.

7. Verfahren nach den Ansprüchen 1 bis 6, **dadurch gekennzeichnet, daß** das bewegliche und Druck auf das Erntegut ausübende Element (8) als Vorpreßwalze (5) und Preßwalze (4) ausgebildet ist, die untereinander mit Schwingen (6) verbunden und mit weiteren Schwingen (7) am Häckselkastengestell (2) schwenkbeweglich angehangen sind.

**Claims**

1. A process for the recognition of foreign bodies in harvesting machines, especially in self-propelled forage harvesters, in which the process comprises these steps:

    a) the harvested crop is fed by a conveyor device (1) in the form of a mat to a processing unit with variable conveyor speeds V,
    b) a movable element (8) transverse to the direction of conveyance of the crop and exerting pressure upon the crop brings about its compression,
    c) the element (8) in doing so, because of the varying depth of the layer of harvested crop and/or the shape of foreign bodies (12) carried along in the crop, performs de-pendent dodging movements,
    d) a measuring device (10) determines measured values ($M_B$) as a measure of the dodging movements of the element (8) per unit time, which are passed on to an evaluation unit (13),
    e) the evaluation unit (13) produces a signal, when the measured value ($M_B$) attains or exceeds a prescribed threshold value (S), which is passed on to a display or stopping device (14) for stopping the conveyor device (1),
    which is **characterised in that**
    f) for a defined conveyor speed ($V_D$) the evaluation unit (13) is prescribed a defined threshold value ($S_D$), which is greater than the measured value ($M_x$) for the maximum dodging movements from the varying layer depth of the crop at this defined conveyor speed ($V_D$),
    g) for each of the conveyor speeds (V) deviating from the defined conveyor speed ($V_D$) the threshold value (S) which is used for comparison with the measured value ($M_B$) from the product of the defined threshold value ($S_D$) and a quotient formed from the square of the conveyor speed (V) in the numerator and the square of the defined conveyor speed ($V_D$) in the denominator, a fresh calculation is performed.

2. A process in accordance with claim 1, **characterised in that**,

    a) the defined conveyor speed ($V_D$) which is the lowest conveyor speed realised in the harvesting machine, for the evaluation unit (13) the accordingly defined threshold value ($S_D$) is prescribed, which is greater than the measured value ($M_X$) for the maximum dodging movements arising from the varying depth of the layer of the crop at the lowest conveyor speed,
    b) the absolute amount of the lowest conveyor speed in the evaluation unit (13) regardless of its actual magnitude and dimensioning obtains the value ("1") purely by computation.
    c) with increasing conveyor speed (V) the threshold value (S) utilised for the comparison with the measured value ($M_B$) is calculated from the product of the defined threshold value ($S_D$) for the lowest conveyor speed and the square of the absolute amount of the increasing conveyor speed (V), where the absolute amount of the increasing conveyor speed (V) starting out from the value ("1") for the lowest conveyor speed is formed analogously.

3. A process for the recognition of foreign bodies in harvesting machines, especially in self-propelled forage harvesters, in which the process comprises these steps:

    a) the harvested crop is fed by a conveyor device (1) in the form of a mat to a processing unit with variable conveyor speeds V,
    b) a movable element (8) transverse to the direction of conveyance of the crop and exerting pressure upon the crop brings about its compression,
    c) the element (8) in doing so, because of the varying depth of the layer of harvested crop and/or the shape of foreign bodies (12) carried along in the crop, performs de-pendent dodging movements,
    d) a measuring device (10) determines measured values (MB) as a measure of the dodging movements of the element (8) per unit time, which are passed on to an evaluation unit (13),
    e) the evaluation unit (13) produces a signal, when the measured value (MB) attains or exceeds a prescribed threshold value (S), which is passed on to a display or stopping device (14) for stopping the conveyor device (1),
    which is **characterised in that**
    f) for a defined conveyor speed ($V_D$) the evaluation unit (13) is prescribed a defined threshold value ($S_D$), which is greater than the measured value ($M_X$) for the maximum dodging movements from the varying layer depth of the crop at this defined conveyor speed ($V_D$),

g) for each of the conveyor speeds (V) deviating from the defined conveyor speed ($V_D$) the changed measurement value ($M_B$) which is used for the comparison with the defined threshold value ($S_D$) by multiplication with the quotients, formed from the square of the defined conveyor speed ($V_D$) in the numerator and the square of the conveyor speed (V) in the denominator, is calculated afresh.

4. A process in accordance with claims 1 to 3, **characterised in that** the measuring device (10) is an acceleration sensor (11).

5. A process in accordance with claims 1 to 3, **characterised in that** the measuring device (10) is a sensor for detecting the damping force or the damping pressure of a shock absorber, in which the shock absorber is situated between the movable element (8) exerting pressure upon the harvested crop and the chopping box frame (2).

6. A process in accordance with claims 1 to 5, **characterised in that** the measured values ($M_B$) and the threshold values ($S_D$; S) are converted into electrical voltage pulses.

7. A process in accordance with claims 1 to 6, **characterised in that** the movable element (8) exerting pressure upon the crop is formed as the pre-pressing roller (5) and the pressing roller (4), which are joined to each other by rocker arms (6) and are suspended by further rocker arms (7) on the chopping box frame (2) so that they can tilt.

**Revendications**

1. Procédé pour la détection de corps étrangers dans des machines de récolte, en particulier des ramasseuses-chargeuses-hacheuses de fourrage automotrices, le procédé comprenant les étapes suivantes :

    a) le produit de récolte est conduit par un dispositif de transport (1) ayant la forme d'un tapis à un groupe de travail selon des vitesses de transport variables V,

    b) un élément (8) mobile transversalement par rapport au sens de transport des produits de récolte et exerçant une pression sur les produits de récolte assure leur compaction.

    c) l'élément (8) exécute ce faisant des mouvements d'évitement qui dépendent de la hauteur de couche fluctuante du produit de récolte et/ou de la forme des corps étrangers (12) entraînés dans les produits de récolte,

    d) un dispositif de mesure (10) détermine des valeurs de mesure ($M_B$) comme mesure pour les mouvements d'évitement de l'élément (8) par unité de temps, valeurs qui sont conduites à une unité d'exploitation (13),

    e) l'unité d'exploitation (13) génère un signal lorsque la valeur de mesure ($M_B$) atteint ou dépasse une valeur de seuil prédéfinie (S), signal qui est conduit à un dispositif d'affichage ou d'arrêt (14) pour l'immobilisation du dispositif de transport (1).

    **caractérisé en ce que** :

    f) une valeur de seuil définie ($S_D$) est prédéfinie pour une vitesse de transport définie ($V_D$) de l'unité d'exploitation (13). Cette valeur de seuil est supérieure à la valeur de mesure ($M_X$) pour des mouvements d'évitement maximum provenant de la hauteur de couche fluctuante des produits de récolte pour cette vitesse de transport définie ($V_D$),

    g) pour chaque vitesse de transport (V) s'écartant de la vitesse de transport définie ($V_D$), la valeur de seuil (S) utilisée pour la comparaison avec la valeur de mesure ($M_B$) qui découle du produit de la valeur de seuil définie (S) et d'un quotient formé à partir du carré de la vitesse de transport (V) dans le numérateur et le carré de la vitesse de transport définie ($V_D$) dans lé dénominateur, est calculée à nouveau.

2. Procédé selon la revendication 1, **caractérisé en ce que**

    a) la vitesse de transport définie (VD) est la vitesse de transport minimale réalisée dans la machine de récolte pour laquelle la valeur de seuil définie ($S_D$) correspondante de l'unité d'évaluation (13) est prédéfinie. Cette valeur de seuil est supérieure à la valeur de mesure ($M_X$) pour les mouvements d'évitement maximum dérivant de la hauteur de couche fluctuante des produits de récolte pour la vitesse de transport minimale,

    b) la valeur absolue de la vitesse de transport minimale dans l'unité d'évaluation (13) reçoit la valeur de calcul (" 1 "), purement théorique, indépendamment de sa grandeur et de son dimensionnement réels,

    c) avec l'augmentation de la vitesse de transport (V), la valeur de seuil (S) utilisée pour la comparaison avec la valeur de mesure ($M_B$) est calculée à partir du produit de la valeur de seuil définie ($S_D$) pour la vitesse de transport minimale et le carré de la valeur absolue de la vitesse de transport (V) qui augmente, la valeur absolue de la vitesse de transport en augmentation (V) étant formée, de manière analogue, à partir de la valeur ("1") pour la vitesse de transport minimale.

**3.** Procédé pour la détection de corps étrangers dans des machines de récolte, en particulier des ramasseuses-chargeuses-hacheuses de fourrage automotrices, le procédé comprenant les étapes suivantes :

a) le produit de récolte est conduit par un dispositif de transport (1) ayant la forme d'un tapis à un groupe de travail selon des vitesses de transport variables (V),

b) un élément (8) mobile transversalement par rapport au sens de transport des produits de récolte et exerçant une pression sur les produits de récolte assure leur compaction.

c) l'élément (8) exécute ce faisant des mouvements d'évitement qui dépendent de la hauteur de couche fluctuante du produit de récolte et/ou de la forme des corps étrangers (12) entraînés dans les produits de récolte,

d) un dispositif de mesure (10) détermine des valeurs de mesure ($M_B$) comme mesure pour les mouvements d'évitement de l'élément (8) par unité de temps, valeurs qui sont conduites à une unité d'exploitation (13)

e) l'unité d'exploitation (13) génère un signal lorsque la valeur de mesure ($M_B$) atteint ou dépasse une valeur de seuil prédéfinie (S), signal qui est conduit à un dispositif d'affichage ou d'arrêt (14) pour l'immobilisation du dispositif de transport (1).

**caractérisé en ce que** :

f) une valeur de seuil définie ($S_D$) est prédéfinie pour une vitesse de transport définie ($V_D$) de l'unité d'exploitation (13). Cette valeur de seuil est supérieure à la valeur de mesure ($M_X$) pour des mouvements d'évitement maximum provenant de la hauteur de couche fluctuante des produits de récolte pour cette vitesse de transport définie ($V_D$),

g) pour chaque vitesse de transport (V) s'écartant de la vitesse de transport définie ($V_D$), la valeur de mesure modifiée utilisée pour la comparaison avec la valeur de seuil définie ($S_D$) est recalculée par multiplication avec le quotient formé à partir du carré de la vitesse de transport définie ($V_D$) dans le numérateur et le carré de la vitesse de transport (V) dans le dénominateur.

**4.** Procédé selon les revendications 1 à 3, **caractérisé en ce que** le dispositif de mesure (10) est un capteur d'accélération (11).

**5.** Procédé selon les revendications 1 à 3, **caractérisé en ce que** le dispositif de mesure (10) est un capteur qui saisit l'effort d'amortissement ou la pression d'amortissement d'un amortisseur de chocs, ce dernier se trouvant entre l'élément mobile (8) exerçant une pression sur les produits de récolte et le bâti en caisson pour le fourrage haché (2).

**6.** Procédé selon les revendications 1 à 5. **caractérisé en ce que** les valeurs de mesure ($M_B$) et les valeurs de seuil ($S_D$; S) sont transformées en impulsions de tension électriques.

**7.** Procédé selon les revendications 1 à 6, **caractérisé en ce que** l'élément (8) mobile et exerçant une pression sur les produits de récolte a la forme d'un rouleau de précompression (5) et d'un rouleau de compression (4) reliés l'un à l'autre par des bielles oscillantes (6) et suspendus de manière pivotante par d'autres bielles oscillantes (7) au bâti en caisson pour le fourrage haché (2).

Fig. 1

Fig. 2

10

EP 1 029 443 B1